Europäisches Patentamt

European Patent Office

Office européen des brevets

(19)

(11) **EP 1 102 249 B1**

(12) **EUROPEAN PATENT SPECIFICATION**

(45) Date of publication and mention
of the grant of the patent:
**05.11.2003 Bulletin 2003/45**

(51) Int Cl.⁷: **G11B 7/007**, G11B 7/00,
G11B 7/24, G11B 19/04,
G11B 20/10

(21) Application number: **99933163.0**

(22) Date of filing: **28.07.1999**

(86) International application number:
**PCT/JP99/04083**

(87) International publication number:
**WO 00/007183 (10.02.2000 Gazette 2000/06)**

(54) **REPRODUCING APPARATUS AND RECORDED MEDIUM**

WEIDERGABEGERÄT UND AUFGEZEICHNETES MEDIUM

APPAREIL DE REPRODUCTION ET SUPPORT ENREGISTRE

(84) Designated Contracting States:
**DE FR GB**

(30) Priority: **29.07.1998 JP 21368598**
**25.08.1998 JP 23818098**
**25.08.1998 JP 23818198**

(43) Date of publication of application:
**23.05.2001 Bulletin 2001/21**

(73) Proprietor: **MATSUSHITA ELECTRIC INDUSTRIAL
CO., LTD.**
**Kadoma-shi, Osaka 571-8501 (JP)**

(72) Inventors:
• **OKAMOTO, Kojiro**
**Suita-shi, Osaka 564-0041 (JP)**
• **SHIMADA, Hiromichi**
**Hyogo 663-8023 (JP)**
• **FUKUSHIMA, Yoshihisa**
**Osaka-shi, Osaka 536-0008 (JP)**

(74) Representative: **Grünecker, Kinkeldey,
Stockmair & Schwanhäusser Anwaltssozietät
Maximilianstrasse 58
80538 München (DE)**

(56) References cited:
EP-A- 0 342 748          EP-A- 0 545 472
EP-A- 0 798 711          WO-A-98/47135
JP-A- 8 153 342          JP-A- 9 081 938
JP-U- 2 005 111          US-A- 5 856 958

EP 1 102 249 B1

**Description**

This invention relates to a disk-shaped recording medium into which a user is able to record a data signal and to a reproducing apparatus for reproducing main data recorded on such a recording medium.

A recording system using a disc-shaped recording medium is known from EP-A-0 342 748, which is used for the two-part form delimitation. Information can be recorded into a pre-formed track of the recording medium. The pre-formed track wobbles wherein the undulations are frequency modulated in order to contain control information including a position information, a synchronization signal and an information type for which the recording medium is intended. The track includes a lead-in portion which may also comprise pre-recorded information. A recording apparatus extracts the control information from the track undulations in order to enable or prevent a writing of information of a specific type to the recording medium.

As one type of conventional mass-storage recording medium, there are optical disks known as DVDs (Digital Video Disks or Digital Versatile Disks). A DVD-ROM (Read Only Memory) is a reproduction-only type optical disk on which video and audio data of a movie, music, and the like and data such as representing a computer program have been recorded at the time of its manufacture. A DVD-R (Recordable) is a write-once type optical disk onto which a user is able to record a data signal. In the following description, the DVD-ROM is referred to as a ROM disk and the DVD-R is referred to as an R disk.

If copying of main data recorded on a ROM disk into an R disk is free to carry out, this may cause various problems against copyright laws. Generally, to provide a copy protection scheme, at the time of the manufacture of a ROM disk its main data is encrypted before being recorded in a primary recording region of the ROM disk and key information for decrypting encryption of the main data is recorded in a secondary recording region of the ROM disk located on the side of an internal periphery of the primary recording region. In addition, it is possible to take other countermeasures against unauthorized copying. For example, at the time of the manufacture of an R disk, invalid key information is recorded in a secondary recording region of that R disk and identification information indicating that the disk concerned is not a ROM disk but an R disk is recorded also in the secondary recording region. However, these copy protection schemes are considered not to be thoroughgoing. If encrypted main data on a ROM disk is copied into a primary recording region of an R disk, together with its control information including a key information item and an identification information item indicating that the disk concerned is a ROM disk, it is likely that the copied main data is reproduced by the use of the copied control information in a conventional DVD reproducing apparatus. This is due to the fact that if false control information exists in a primary recording region of an R disk this causes a conventional DVD reproducing apparatus to mistakenly accept such control information prior to seeking out genuine control information in a secondary recording region of the R disk.

Accordingly, an object of the present invention is to make it possible to ignore, even when false control information is copied into a primary recording region of a recording medium into which a user is able to record data signals, such false control information, for seeking out genuine control information in a secondary recording region of the recording medium.

This is achieved by the features of claim 1 for a disk-shaped recording medium and the features of claim 3 for a reproducing apparatus.

Further embodiments are the subject-matter of dependent claims.

According to the present invention, even when false control information is copied into a primary recording region of a recording medium into which a user is able to record data signals, it is possible to seek out genuine control information in a secondary recording region of the recording medium. This provides an effective copy protection scheme. For example, control information in the secondary recording region includes an invalid key information item for inhibition of reproduction, of encrypted main data, so that when main data copied and recorded in the primary recording region is encrypted its reproduction can be. canceled according to the invalid key information item. Further, control information in the secondary recording region includes an identification information item representative of the type of the recording medium, so that when the identification information item indicates that recording of a data signal into the primary recording region by a user is possible and, in addition, main data recorded in the primary recording region is encrypted, it is possible to cancel reproduction of the main data. However, in the case main data recorded in the primary recording region is not encrypted, it is possible to continue reproduction of the main data.

Figure **1** is a perspective view of an optical disk showing one example of a recording medium according to the present invention.
Figure **2** is a partly enlarged plan view of a track in a primary recording region in Figure **1**.
Figure **3** is a partly enlarged plan view of a track in a. secondary recording region in Figure **1**.
Figure **4** is a diagram showing a variation of Figure **3**.
Figure **5** is a circuit block diagram showing a construction example of a DVD reproducing apparatus according to the present invention, with an optical disk of Figure **1** mounted thereto.
Figure **6** is a waveform diagram of a tracking error signal when the primary recording region in Figure **1** is being scanned with a light beam.

Figure **7** is a conceptual diagram showing one example of a data structure in the optical disk of Figure **1**.

Figure **8** is a circuit block diagram showing a construction example of another DVD reproducing apparatus of the present invention.

## BEST MODE FOR CARRYING OUT THE INVENTION

Embodiments of the present invention will be described with reference to the accompanying drawings.

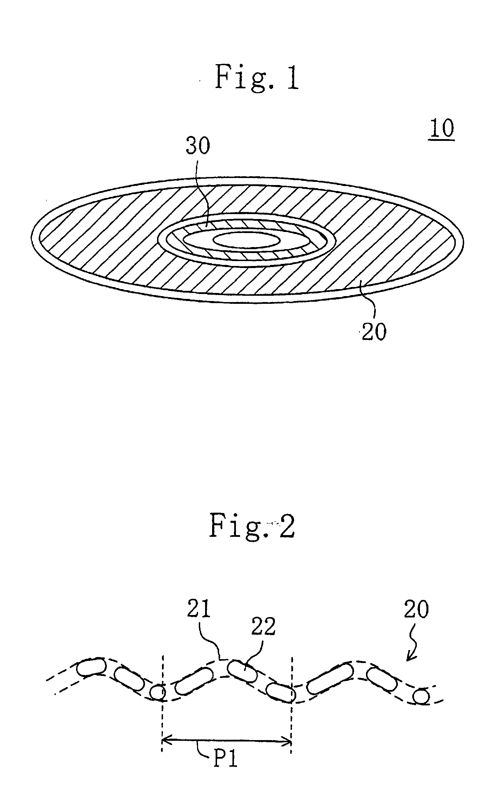

Figure **1** shows an optical disk which is one example of a recording medium according to the present invention. The optical disk **10** of Figure **1** is a DVD-R, i. e., an R disk. The optical disk **10** comprises a clamping region defined around the periphery of a center hole of the optical disk **10** and, in an area of the optical disk **10** not occupied by the clamping region, a primary recording region **20** and a secondary recording region **30** located on the side of an internal periphery of the primary recording region **20.**

Figure **2** is a partly enlarged plan view of a track in the primary recording region **20** in Figure **1**. The primary recording region **20** has a track **21** formed of a groove which wobbles at a pitch P1, and a user is able to record a data signal by formation of information pits **22** along the track **21**. The degree of wobbling of the track **21** can be expressed by the number of wobbles (N) with respect to a prescribed track length (L). For example, the number of wobbles is eight for a prescribed track length of 218.7 μm. In other words, the pitch P1 of the track **21** is about 27.3 μm.

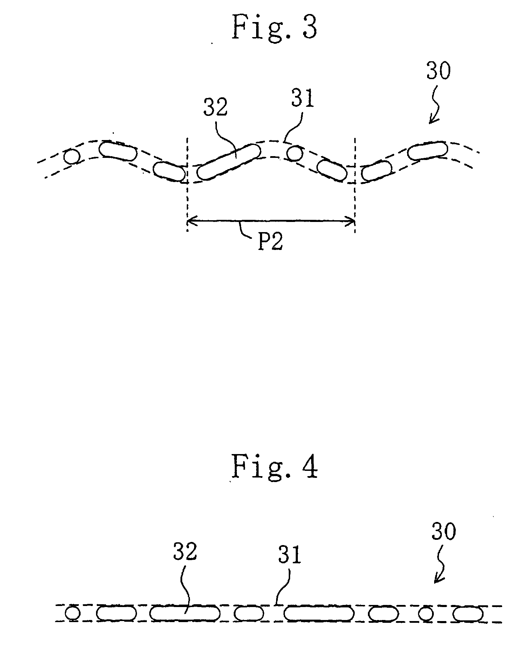

Figure **3** is a partly enlarged plan view of a track in the secondary recording region **30** in Figure **1**. The secondary recording region **30** has a track 31 formed of a groove which wobbles at a pitch P2 different from the wobble pitch P1 of the track **21** in the primary recording region **20,** and information pits **32** are formed along the track **31** to record a signal representative of control information at the time of the manufacture of the R disk **10**. The control information in the secondary recording region **30** includes an invalid key information item for inhibiting, when encrypted main data is copied into the primary recording region **20**, reproduction of the main data and an identification information item indicating that the disk **10** is an R disk. In the example shown in Figure **3**, the wobble pitch P2 of the track **31** is set greater than the wobble pitch P1 of the track **21**.

Reference is now made to Figure **4** which shows a variation of Figure **3**. It suffices for the track **31** in the secondary recording region **30** to be distinguishable from the wobbling track **21** in the primary recording region **20**, so that the track **31** does not necessarily have to wobble, as not all of the tracks in a DVD-ROM (i.e., a ROM disk) wobble.

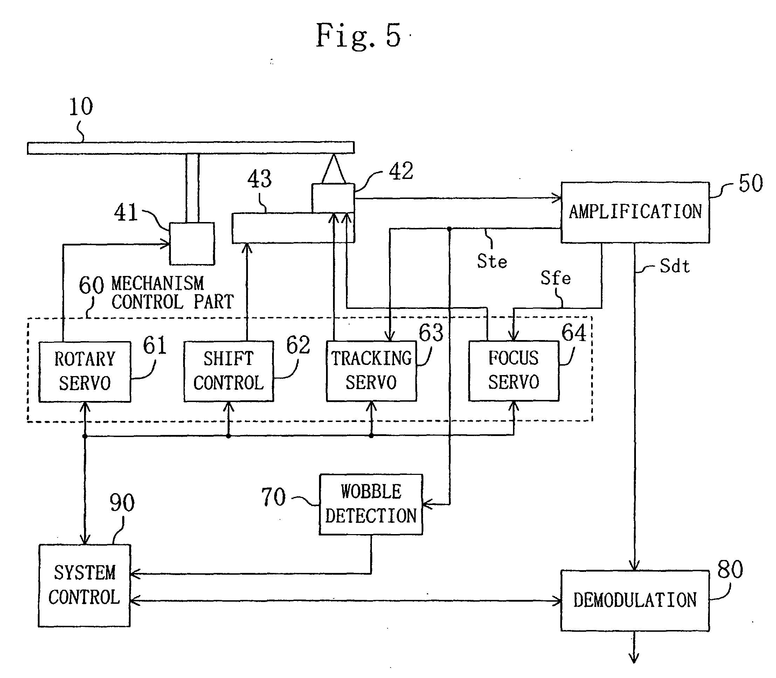

Figure 5 is a circuit block diagram illustrating an construction example of a DVD reproducing apparatus according to the present invention with the R disk **10** of Figure **1** mounted thereto. As will be described later, a ROM disk may be mounted to the DVD reproducing apparatus of Figure **5** instead of the R disk **10**.

The DVD reproducing apparatus of Figure **5** comprises a spindle motor **41** for spinning the R disk **10**, an optical pickup **42** for scanning the R disk **10** under rotation with a light beam and reading a signal from the R disk **10**, and a slider **43** for shifting the optical pickup **42** in the radial direction of the R disk **10**. The apparatus of Figure **5** further includes an amplifier **50**, a mechanism controller part **60**, a wobble detector circuit **70**, a demodulator circuit **80,** and a system controller circuit **90.** The mechanism controller part **60** is constructed of a rotary servo circuit **61**, a shift controller circuit **62,** a tracking servo circuit **63,** and a focus servo circuit **64**.

The rotary servo circuit **61** controls the number of revolutions of the spindle motor **41** according to instructions from the system controller circuit **90** so that the R disk **10** spins at a constant linear velocity (CLV). The shift controller circuit **62** controls the slider **43** according to instructions from the system controller circuit **90** so that the optical pickup **42** is shifted in the radial direction of the R disk **10**. The amplifier **50** amplifies an output of the optical pickup **42.** In addition to this, the amplifier **50** has a function of performing addition/subtraction operations on a plurality of sensor signals forming an output of the optical pickup **42** thereby to generate a tracking error signal Ste and a focus error signal Sfe and a function of binarizing a modulated output of the optical pickup **42** thereby to generate a data detection signal Sdt. The tracking error signal Ste is provided to the tracking servo circuit **63** and to the wobble detector circuit **70**, the focus error signal Sfe is provided to the focus servo circuit **64**, and the data detection signal Sdt is provided to the demodulator circuit **80**. The tracking servo circuit **63** controls the optical pickup **42** so that the position at which the optical pickup **42** reads a signal (i. e., the light beam irradiation point) follows the tracks **21** and **31** of the R disk **10**, thereby to reduce the tracking error signal Ste. The wobble detector circuit **70** detects a signal for a frequency component which is contained in the tracking error signal Ste due to the wobbling of the track **21** and/or the track **31** and the detection result is sent to the system controller circuit **90**. The focus servo circuit **64** controls vertical movement of the optical pickup **42** so that a light beam is focused to the R disk **10**, thereby to reduce the focus error signal Sfe. The demodulator circuit **80** is a circuit operable to demodulate the data detection signal Sdt to obtain main data and control information. The control information thus obtained is sent to the system controller circuit **90**. The system controller circuit **90** is a circuit operable to control the entirety of the DVD reproducing apparatus of Figure **5**.

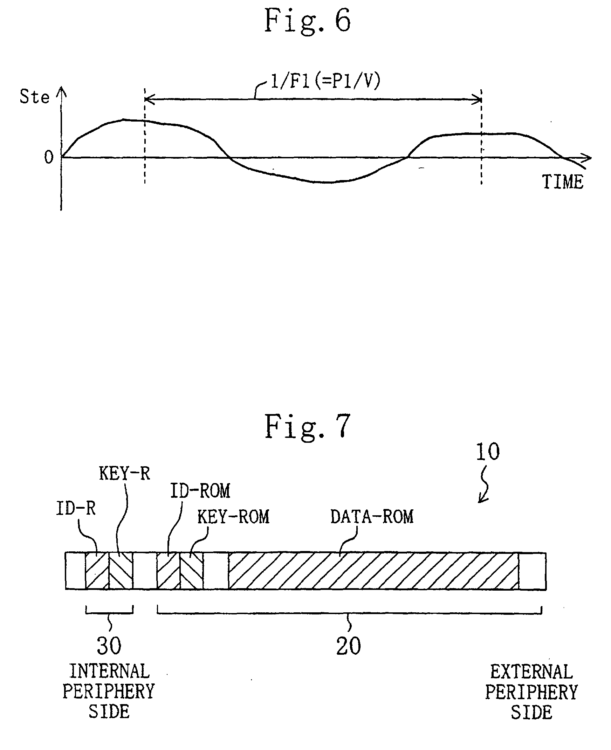

Figure **6** is a waveform diagram of the tracking error signal Ste when the primary recording region **20** in Figure **1** is being scanned with a light beam. The tracking error signal Ste contains a signal component having a wobble frequency F1 according to the wobble pitch P1 of the track **21** in the primary recording region **20**. This is because the frequency characteristic of the tracking servo circuit **63** is set such that the tracking servo circuit **63** does not have a gain sufficient enough to enable the light beam to follow the wobbling track **21** at the wobble frequency F1. The wobble frequency F1 can be defined by the number of wobbles per second when the wobbling track **21** is scanned at a constant linear velocity V, as expressed below.

$$F1 = (N/L) \times V = V/P1$$

In other words, the wobble frequency F1 is determined by the wobble pitch P1 of the track **21** and the constant linear velocity V. Here, if V = 3.84 m/s, then F1 = 140 kHz for the above-described example (in which L = 218.7 μm and N = 8).

The tracking error signal Ste when the secondary recording region **30** is being scanned with a light beam contains a signal component having a wobble frequency F2 lower than the wobble frequency F1 if the track **31** in the secondary recording region **30** wobbles at the pitch P2 (P2 > P1) as shown in Figure **3**. If the track **31** in the secondary recording region **30** does not wobble as shown in Figure **4**, this enables the light beam to accurately follow the track **31** and, as a result, the tracking error signal Ste becomes zero.

The system controller circuit **90** in Figure **5** issues instructions to the shift controller circuit **62,** thereby to make it possible to shift the optical pickup **42** in a direction toward an internal periphery of the R disk **10** until the optical pickup **42** reaches a specific point of the secondary recording region **30** at which the tracking error signal Ste no longer contains a signal component having the wobble frequency F1, so that even when false control information is copied into the primary recording region **20** such false control information is ignored. Further, the system controller circuit **90** issues instructions to the demodulator circuit **80**, thereby to make it possible to start, according to control information in the secondary recording region **30** represented by an output of the optical pickup **42** shifted up to the point of the secondary recording region **30**, reproduction of main data recorded in the primary recording region **20**. In the case main data recorded in the primary recording region **20** of the R disk **10** is not encrypted, reproduction of the main data will continue, so that the main data recorded on the R disk **10** can be reproduced by the DVD reproducing apparatus of Figure **5**.

Reference is now made to Figure **7** which shows one example of a data structure in the R disk **10** of Figure **1**. More detailedly, Figure **7** shows a state in which encrypted main data DATA-ROM on a ROM disk (not shown) is copied into the primary recording region **20** of the R disk **10** together with control information including a key information item KEY-ROM on the ROM disk and an identification information item ID-ROM indicating that the disk concerned is a ROM disk. As described above, the main data DATA-ROM, the false control information items KEY-ROM and ID-ROM are recorded along the track **21** which wobbles at the pitch P1 in the primary recording region **20**. On the other hand, control information including an invalid key information item KEY-R for inhibition of reproduction of the copied main data DATA-ROM and an identification information item ID-R indicating that the disk **10** is an R disk is recorded at the time of the manufacture of the R disk **10**. These genuine control information items KEY-R and ID-R are recorded along-the track **31** in the secondary recording region **30** which wobbles at the pitch P2 or does not wobble.

The operation of the DVD reproducing apparatus of Figure **5** with the R disk **10** having a data structure as shown in Figure **7** mounted thereto will be described. The initial position of the optical pickup **42** is the read position of the main data DATA-ROM. The initial position of the optical pickup **42** is the position where the rotary servo circuit **61,** the tracking servo circuit **63,** and the focus servo circuit **64** start operating. The system controller circuit **90** issues instructions to the shift controller circuit **62** so as to shift the optical pickup **42** in a direction toward the internal periphery of the R disk **10** until certain control information is found out. In this way, the optical pickup **42** arrives at the false control information items KEY-ROM and ID-ROM. However, the wobble detector circuit 70 detects a signal component having the wobble frequency F1 in the tracking error signal Ste and the detection result is sent to the system controller circuit **90**. As a result, the system controller circuit **90** issues instructions to the shift controller circuit **62** so that the optical pickup **42** is further shifted toward the internal periphery of the R disk **10** until the next control information is found out. In this way, the optical pickup **42** finally arrives at the genuine control information items KEY-R and ID-R. The tracking error signal Ste at this point of time does not contain any signal component having the wobble frequency F1, so that these genuine control information items KEY-R and ID-R are accepted by the system controller circuit **90**. Thereafter, the system controller circuit **90** issues to the shift controller circuit' **62** instructions so that the optical pickup **42** is shifted in a direction toward the external periphery of the R disk **10** to the location of the main data DATA-ROM.

It is possible to tell whether the main data is encrypted or not from a flag which is located at the head of each divided section of the main data. In the example shown in Figure **7**, the main data DATA-ROM is encrypted, so that the demodulator circuit **80** is unable to decrypt encryption of the main data even if the invalid key information item KEY-R is used. In other words, the system controller circuit **90** is able to cancel, when main data recorded in the primary recording region **20** is encrypted, reproduction of the main data by the demodulator circuit **80** according to the invalid key information item KEY-R. In this case, recording of the identification information item ID-R into the secondary recording region **30** may be omitted.

Further, the identification information item ID-R may be utilized for copy protection. That is to say, the system controller circuit **90** is able to cancel, when the identification information item indicates that the disk **10** concerned is an R disk and, in addition, the main data recorded in the primary recording region **20** is encrypted, reproduction of the main data by the demodulator circuit **80**. In this case, recording of the invalid key information item KEY-R into the secondary recording region **30** may be omitted.

As described above, it is possible to mount to the DVD reproducing apparatus of Figure **5** a ROM disk in place of the R disk **10**. Here, encrypted main data is recorded in a primary recording region of the ROM disk, and control information including a key information item for decrypting the encryption and an identification information item indicating that the disk concerned is a ROM disk is recorded in a secondary recording region of the ROM disk. However, none of the tracks in the primary and secondary recording regions wobbles. The DVD reproducing apparatus of Figure **5** facilitates seeking out genuine control information in the secondary recording region of the ROM disk. The tracking error signal Ste at this point in time does not contain any signal component having the wobble frequency F1, so that the genuine control information found out is accepted by the system controller circuit **90.** The demodulator circuit **80** is able to decrypt encryption of the main data by the use of the genuine key information.

As described above, according to the DVD reproducing apparatus of Figure 5, it is possible to seek out genuine control information, even when an R disk having a primary recording region with false control information copied thereinto is mounted, or even when a conventional ROM disk is mounted. This provides an effective copy protection scheme and there is no interference with normal reproduction.

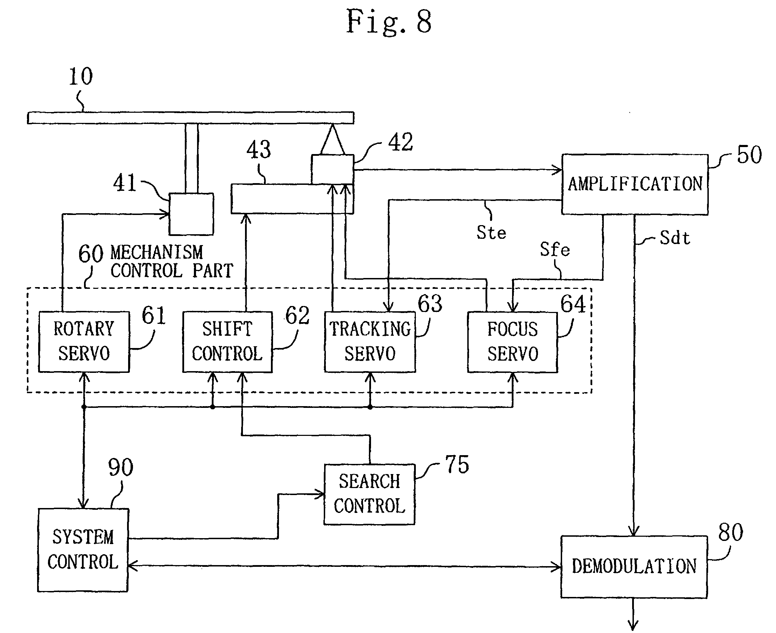

Reference is made to Figure **8** which illustrates a construction example of a DVD reproducing apparatus according to the present invention. In Figure **8**, reference numeral **10** denotes an R disk having a primary recording region into which a user is able to record a data signal and a secondary recording region which is located on the side of the internal periphery of the primary recording region and into which a signal representative of control information is already prerecorded at the time of the manufacture of the R disk **10**. The R disk **10** does not necessarily have a wobbling track in the primary recording region.

The DVD reproducing apparatus of Figure **8** is provided with a search controller circuit **75** in place of the wobble detector circuit **70** of Figure **5**. The search controller circuit **75** issues to the shift controller circuit **62** instructions thereby to shift the optical pickup **42** toward the internal periphery of the R disk **10** until the optical pickup **42** reaches its shift limit point, for searching the R disk **10** for every control information recorded therein. That the optical pickup **42** is shifted to the shift limit point is detected by the system controller circuit **90,** for example, from the fact that a signal read by the optical pickup **42** stays unchanged. At this point in time, the system controller circuit **90** instructs the search controller circuit **75** not to conduct further searches. Further, it is arranged such that the system controller circuit **90** starts reproduction of the main data recorded in the primary recording region according to the control information in the secondary recording region obtained finally from an output of the optical pickup **42** during shifting of the optical pickup **42**, so that even when false control information is copied into the primary recording region of the R disk **10** such false control information is ignored.

According to the DVD reproducing apparatus of Figure **8**, as in the case of Figure **5**, even when an R disk having a primary recording region with false control information copied thereinto is mounted, or even when a conventional ROM disk is mounted, it is possible to seek out genuine control information. This provides an effective copy protection scheme and there is no interference with normal reproduction.

## INDUSTRIAL APPLICABILITY

According to the present invention, even when false control information is copied into a primary recording region of a recording medium into which a user is able to record data signals, such false control information is ignored and genuine control information in a secondary recording region of the recording medium is found out. This accordingly provides an improved DVD reproducing apparatus capable of providing an effective copy protection scheme.

## Claims

1. A disk-shaped recording medium comprising a primary recording region (20) and a secondary recording region (30) which is located on the side of an internal periphery of said primary recording region (20),
   wherein said primary recording region (20) has a track (21) along which a user is able to record a data signal; and
   wherein said secondary recording region (30) has a track (31) along which a signal representative of control information is already prerecorded in the form of in formation pits (32) at the time of the manufacture of said recording medium,
   **characterized in that**
   said control information in said secondary recording region (30) includes an invalid key information item (KEY-R) for inhibiting, when encrypted main data is copied into said primary recording region, reproduction of said main data;

wherein said track (21) of said primary recording region (20) wobbles at a first pitch (P1); and

wherein said track (31) of said secondary recording region (30) wobbles at a second pitch (P2) different from said first pitch (P1) or does not wobble.

2. The recording medium of claim 1, wherein said control information in said secondary recording region (30) includes an identification information item (ID-R) required at the time of reproduction and representative of the type of said recording medium.

3. A reproducing apparatus for the reproduction of main data recorded on a recording medium (10), said recording medium (10) comprising a primary recording region (20) having a track (21) wobbling at a first pitch (P1) along which a user is able to record data, and comprising a secondary recording region (30) located on the side of an internal periphery of said recording medium (10) having a track (31) along which control information including an invalid key information item (KEY-R) is prerecorded, said track (31) of said secondary recording region (30) wobbles at a second pitch (P2) different from said first pitch (P1) or does not wobble, said reproducing apparatus comprising:

means (61) for spinning said recording medium (10);

a pickup (42) for reading a signal from said recording medium (10) under rotation;

means (63) by which a signal read position by said pickup (42) follows said tracks (21, 31) of said recording medium (10);

means (50) for generating a tracking error signal from an output of said pickup (42);

means (62, 70, 90) for shifting said pickup (42) in a direction toward an internal periphery of said recording medium (10) until said pickup (42) reaches a specific radial position of said secondary recording region (30) at which said tracking error signal no longer contains a signal component having a frequency which is determined by said first pitch (P1) relating to the wobbling of said track (21) in said primary recording region (20), and for accepting only control information represented by an output of said pickup (42) shifted to said specific radial position of said secondary recording region (30), so that false

control information copied into said primary recording region (20) is ignored; and

means (80, 90) for starting reproduction of main data recorded in said primary recording region (20) according to said accepted control information.

4. The reproducing apparatus of claim 3, wherein said reproducing apparatus further comprises means (90) for canceling reproduction of said main data according to said invalid key information item (KEY-R) when main data recorded in said primary recording region (20) is encrypted.

5. The reproducing apparatus of claims 3 or 4, wherein said accepted control information includes an identification information item (ID-R) representative of the type of said recording medium (10); and wherein said reproducing apparatus further comprises means (90) for canceling reproduction of said main data when said identification information item (ID-R) indicates that recording of a data signal into said primary recording region (20) by a user is possible and, in addition, main data recorded in said primary recording region (20) is encrypted.

6. The reproducing apparatus according to any of claims 3 to 5, further comprising means (80, 90) for continuing reproduction of said main data when main data recorded in said primary recording region (20) is not encrypted.

7. The reproducing apparatus according to any of claims 3 to 6, further comprising means (75, 90) for shifting said pickup (42) in a direction towards an internal periphery of said recording medium (10), for searching control information until shifting of said pickup (42) is stopped when a shift limit point is reached, and for accepting only control information being represented by an output of said pickup (42) during shifting of said pickup (42) and being obtained finally before said shift limit point is reached.

**Patentansprüche**

1. Plattenförmiges Aufzeichnungsmedium, das einen Primär-Aufzeichnungsbereich (20) und einen Sekundär-Aufzeichnungsbereich (30) umfasst, der sich an der Seite eines inneren Randes des Primär-Aufzeichnungsbereiches (20) befindet, wobei der Primär-Aufzeichnungsbereich (20) eine Spur (21) aufweist, auf der ein Benutzer ein Datensignal aufzeichnen kann; und wobei der Sekundär-Aufzeichnungsbereich (30) eine Spur (31) aufweist, auf der ein Signal, das für Kontrollinformationen steht, bereits zum Zeitpunkt der Herstellung des Aufzeichnungsmediums in Form von Informations-Pits (32) vorab aufgezeichnet wird,

**dadurch gekennzeichnet, dass**:

die Kontrollinformationen in dem Sekundär-Aufzeichnungsbereich (30) ein Ungültiger-Schlüssel-Informationselement (KEY-R) enthalten, das, wenn verschlüsselte Hauptdaten in den Primär-Aufzeichnungsbereich kopiert werden, Wiedergabe der Hauptdaten verhindert;

wobei die Spur (21) des Primär-Aufzeichnungsbereiches (20) mit einem ersten Maß (P1) wobbelt; und
wobei die Spur (31) des Sekundäraufzeichnungsbereiches (30) mit einem zweiten Maß (P2) wobbelt, das sich von dem ersten Maß (P1) unterscheidet, oder nicht wobbelt.

2. Aufzeichnungsmedium nach Anspruch 1, wobei die Kontrollinformationen in dem Sekundär-Aufzeichnungsbereich (30) ein Identifizierungs-Informationselement (ID-R) enthalten, das zum Zeitpunkt der Wiedergabe erforderlich ist und für den Typ des Aufzeichnungsmediums steht.

3. Wiedergabevorrichtung für die Wiedergabe von Hauptdaten, die auf einem Aufzeichnungsmedium (10) aufgezeichnet sind, wobei das Aufzeichnungsmedium (10) einen Pimär-Aufzeichnungsbereich (20) umfasst, der eine Spur (21), die mit einem ersten Maß (P1) wobbelt, aufweist, auf der ein Benutzer Daten aufzeichnen kann, und einen Sekundär-Aufzeichnungsbereich (30) umfasst, der sich auf der Seite eines inneren Randes des Aufzeichnungsmediums (10) befindet und eine Spur (31) aufweist, auf der Kontrollinformationen, die ein Ungültiger-Schlüssel-Informationselement (KEY-R) enthalten, vorab aufgezeichnet werden, wobei die Spur (31) des Sekundär-Aufzeichnungsbereiches (30) mit einem zweiten Maß (P2) wobbelt, das sich von dem ersten Maß (P1) unterscheidet, oder nicht wobbelt, und wobei die Wiedergabevorrichtung umfasst:

eine Einrichtung (61) zum Drehen des Aufzeichnungsmediums (10);

einen Abnehmer (42) zum Lesen eines Signals von dem in Drehung befindlichen Aufzeichnungsmedium (10);

eine Einrichtung (63), durch die eine Signalleseposition des Abnehmers (42) den Spuren (21, 31) des Aufzeichnungsmediums (10) folgt;

eine Einrichtung (50) zum Erzeugen eines Spurfehlersignals aus einem Ausgang des Abnehmers (42);

eine Einrichtung (62, 70, 90), die den Abnehmer (42) in einer Richtung auf einen inneren Rand des Aufzeichnungsmediums (10) zu verschiebt, bis der Abnehmer (42) eine bestimmte radiale Position des Sekundäraufzeichnungsbereiches (30) erreicht, an der das Spurfehlersignal keine Signalkomponente mehr enthält, die eine Frequenz hat, die durch das erste Maß (P1) bezüglich des Wobbeins der Spur (21) in dem Primär-Aufzeichnungsbereich (20) bestimmt wird, und die nur Kontrollinformationen akzeptiert, die durch einen Ausgang des Abnehmers (42) dargestellt werden, der an die bestimmte radiale Position des Sekundär-Aufzeichnungsbereichs (30) verschoben ist, so dass falsche Kontrollinformationen, die in den Primär-Aufzeichnungsbereich (20) kopiert werden, ignoriert werden; und

eine Einrichtung (80, 90), die Wiedergabe von Hauptdaten, die in dem Primär- Aufzeichnungsbereich (20) aufgezeichnet sind, entsprechend den akzeptierten Kontrollinformationen in Gang setzt.

4. Wiedergabevorrichtung nach Anspruch 3, wobei die Wiedergabevorrichtung des Weiteren eine Einrichtung (90) umfasst, die Wiedergabe der Hauptdaten entsprechend dem Ungültiger-Schlüssel-Informationselement (KEY-R) abbricht, wenn Hauptdaten, die in dem Primär-Aufzeichnungsbereich (20) aufgezeichnet sind, verschlüsselt sind.

5. Wiedergabevorrichtung nach Anspruch 3 oder 4, wobei die akzeptierten Kontrollinformationen ein Identifizierungs-Informationselement (ID-R) enthalten, das für den Typ des Aufzeichnungsmediums (10) steht; und
wobei die Wiedergabevorrichtung des Weiteren eine Einrichtung (90) umfasst, die Wiedergabe der Hauptdaten abbricht, wenn das Identifizierungs-Informationselement (ID-R) anzeigt, dass Aufzeichnen eines Datensignals in den Primär-Aufzeichnungsbereich (20) durch einen Benutzer möglich ist und zusätzlich dazu in dem Primär-Aufzeichnungsbereich (20) aufgezeichnete Hauptdaten verschlüsselt sind.

6. Wiedergabevorrichtung nach einem der Ansprüche 3 bis 5, die des Weiteren eine Einrichtung (80, 90) umfasst, die Wiedergabe der Hauptdaten fortsetzt, wenn in dem Primär-Aufzeichnungsbereich (20) aufgezeichnete Hauptdaten nicht verschlüsselt sind.

7. Wiedergabevorrichtung nach einem der Ansprüche 3 bis 6, die des Weiteren eine Einrichtung (75, 90) umfasst, die den Abnehmer (42) in einer Richtung auf einen inneren Rand des Aufzeichnungsmediums (10) zu verschiebt, um Kontrollinformationen zu suchen, bis die Verschiebung des Abnehmers (42) angehalten wird, wenn ein Verschiebe-Endpunkt erreicht ist, und die nur Kontrollinformationen akzeptiert, die durch einen Ausgang des Abnehmers (42) beim Verschieben des Abnehmers (42) dargestellt werden und abschließend gewonnen werden, bevor der Verschiebe-Endpunkt erreicht ist.

## Revendications

1. Moyen d'enregistrement en forme de disque comprenant une région d'enregistrement primaire (20) et une région d'enregistrement secondaire (30) qui est placée sur le côté de la périphérie interne de ladite région d'enregistrement primaire (20), dans lequel ladite région d'enregistrement primaire (20) possède une piste (21) sur laquelle un utilisateur peut enregistrer un signal de données ; et dans lequel ladite région d'enregistrement secondaire (30) possède une piste (31) sur laquelle un signal représentatif d'une information de commande est déjà préenregistré sous la forme de microcuvettes d'information (32) au moment de la fabrication dudit moyen d'enregistrement, **caractérisé en ce que** ladite information de commande dans ladite région d'enregistrement secondaire (30) comprend un élément d'information de clé d'invalidité (KEY-R) destinée à inhiber, quand on copie des données principales cryptées dans ladite région d'enregistrement primaire, la reproduction desdites données principales ; dans lequel ladite piste (21) de ladite région d'enregistrement primaire (20) est wobulée selon un premier pas (P1) ; et dans lequel ladite piste (31) de ladite région d'enregistrement secondaire (30) est wobulée selon un deuxième pas (P2) différent du premier pas (P1) ou n'est pas wobulée.

2. Moyen d'enregistrement selon la revendication 1, dans lequel ladite information de commande dans ladite région d'enregistrement secondaire (30) comprend un élément d'information d'identification (ID-R) nécessaire au moment de la reproduction et représentative dudit moyen d'enregistrement.

3. Appareil de reproduction destiné à la reproduction de données principales enregistrées sur un moyen d'enregistrement (10), ledit moyen - d'enregistrement (10) comprenant une région d'enregistrement primaire (20) possédant une piste (21) wobulée selon un premier pas (P1) sur laquelle un utilisateur peut enregistrer des données et comprenant une région d'enregistrement secondaire (30) placée sur le côté de la périphérie interne dudit moyen d'enregistrement (10) possédant une piste (31) sur laquelle une information de commande comprenant un élément d'information de clé d'invalidité (KEY-R) est préenregistrée, ladite piste (31) de ladite région d'enregistrement secondaire (30) étant wobulée selon un deuxième pas (P2) différent du premier pas (P1) ou n'étant pas wobulée, ledit appareil de reproduction comprenant :

un moyen (61) destiné à faire tourner ledit moyen d'enregistrement (10) ;
une tête de lecture (42) destinée à lire un signal sur ledit moyen d'enregistrement (10) en rotation ;
un moyen (63) à l'aide duquel une position de lecture d'un signal par ladite tête de lecture (42) suit lesdites pistes (21, 31) dudit moyen d'enregistrement (10) ;
un moyen (50) destiné à générer un signal d'erreur de suivi délivré par une sortie de ladite tête de lecture (42) ;
des moyens (62, 70, 90) destinés à décaler ladite tête de lecture (42) dans une direction orientée vers la périphérie interne dudit moyen d'enregistrement (10) jusqu'à ce que ladite tête de lecture (42) atteigne une position radiale spécifique de ladite région d'enregistrement secondaire (30) à laquelle ledit signal d'erreur de suivi ne contient plus de composante de signal ayant une fréquence qui est déterminée par ledit premier pas (P1) se rapportant à la wobulation de ladite piste (21) dans ladite région d'enregistrement primaire (20), et à n'accepter qu'une information de commande représentée par une sortie de ladite tête de lecture (42) décalée dans ladite position radiale spécifique de ladite région d'enregistrement secondaire (30) de manière à ce que les informations de commande erronées copiées dans ladite région d'enregistrement primaire (20) soient ignorées ; et
des moyens (80, 90) destinés à démarrer la reproduction des données principales enregistrées dans ladite région d'enregistrement primaire (20) en conformité avec ladite information de commande acceptée.

4. Appareil de reproduction selon la revendication 3, dans lequel ledit appareil de reproduction comprend en outre un moyen (90) destiné à annuler la reproduction desdites données principales en conformité avec ledit élément d'information de clé d'invalidité (KEY-R) quand les données principales enregistrées dans ladite région d'enregistrement primaire (20) sont cryptées.

5. Appareil de reproduction selon la revendication 3 ou 4,
dans lequel ladite information de commande acceptée comprend un élément d'information d'identification (ID-R) représentatif du type dudit moyen d'enregistrement ; et
dans lequel ledit appareil de reproduction comprend un outre un moyen (90) destiné à annuler la reproduction desdites données principales quand ledit élément d'information d'identification (ID-R) indique que l'enregistrement d'un signal de données dans ladite région d'enregistrement primaire (20) par un utilisateur est possible et qu'en outre les données principales enregistrées dans ladite région d'enregistrement primaire (20) sont cryptées.

6. Appareil de reproduction selon l'une quelconque des revendications 3 à 5, comprenant en outre des moyens (80, 90) destinés à continuer la reproduction desdites données principales quand les données principales enregistrées dans ladite région d'enregistrement primaire (20) ne sont pas cryptées.

7. Appareil de reproduction selon l'une quelconque des revendications 3 à 6, comprenant en outre des moyens (75, 90) destinés à décaler ladite tête de lecture (42) dans une direction orientée vers la périphérie interne dudit moyen d'enregistrement (10), de manière à rechercher une information de commande jusqu'à ce que le décalage de ladite tête de lecture (42) soit arrêté quand on a atteint un point de limite de décalage, et à n'accepter que l'information de commande représentée par une sortie de ladite tête de lecture (42) pendant le décalage de ladite tête de lecture (42) et obtenue avant finalement qu on ait atteint ledit point de limite de décalage.

Fig.1

10

30

20

Fig.2

21

22

20

P1

...

## Fig. 3

## Fig. 4

# Fig. 5

EP 1 102 249 B1

## Fig. 6

## Fig. 7

# Fig. 8

EP 1 102 249 B1